# EUROPÄISCHE PATENTSCHRIFT

(11) **EP 1 511 636 B1**
(45) Veröffentlichungstag und Bekanntmachung des Hinweises auf die Patenterteilung: **03.09.2008**
(21) Anmeldenummer: 03730102.5
(22) Anmeldetag: 23.05.2003
(51) Int. Cl.: B42D 15/10, G03H 1/26

(54) **SICHERHEITSELEMENT UND VERFAHREN ZU DESSEN HERSTELLUNG**
SECURITY ELEMENT AND METHOD FOR PRODUCTION THEREOF
ELEMENT DE SECURITE ET SON PROCEDE DE PRODUCTION

(30) Priorität: 24.05.2002 DE 10223156
(43) Veröffentlichungstag der Anmeldung: 09.03.2005
(73) Patentinhaber: Giesecke & Devrient GmbH, 81677 München (DE)
(72) Erfinder: DAUSMANN, Günther, 85630 Grasbrunn (DE)
(86) Internationale Anmeldenummer: PCT/EP2003/005427
(87) Internationale Veröffentlichungsnummer: WO 2003/099581

(56) Entgegenhaltungen:
- EP-A- 0 869 408
- EP-A- 1 168 111
- US-A- 5 101 184
- PATENT ABSTRACTS OF JAPAN vol. 2003, no. 04, 2. April 2003 (2003-04-02) & JP 2002 351290 A (DAINIPPON PRINTING CO LTD), 6. Dezember 2002 (2002-12-06)

## Beschreibung

Die Erfindung betrifft eine Sicherheitselement, insbesondere für Wertdokumente, unter Ausnutzung eines holographischen Effektes und ein Verfahren zu dessen Herstellung.

Bei der Anwendung von holographischen Techniken zur Absicherung von Dokumenten und Produkten gegen Fälschung ist der Einsatz von Prägehologrammtechnik zur Erzeugung von Oberflächenhologrammstrukturen weit verbreitet. Mit einem Masterhologramm wird ein Prägestempel erzeugt. Mit diesem Prägestempel wird in ein Substrat eine Oberflächenstruktur z.B. heiß geprägt, die bei Beleuchtung holographische Effekte erzeugt. Mittlerweile ist diese Technik etabliert, so dass eine große Anzahl von Herstellern zur Fabrikation befähigt ist

Zur Absicherung von Dokumente und Produkten gegen Fälschung können auch volumenhologxaphische Techniken verwendet werden, bei denen z.B. in einem Polymerfilm Information im Volumen holographisch gespeichert ist. Aufgrund des komplexen und teuren Produktionsprozesses und der schweren Verfügbarkeit der notwendigen Materialien mit ausreichender Empfindlichkeit ist die Anzahl der Produktionsstätten für die massenweise Herstellung solcher Volumenhologramme sehr viel kleiner als die der zur massen weisen Produktion von Prägehologrammen befähigten Hersteller.

Dennoch wäre es wünschenswert, wenn die Anzahl von zur massenweisen Herstellung von Sicherheitselementen befähigten Produktionsstätten noch geringer wäre.

Es ist die Aufgabe der vorliegenden Erfindung, ein Sicherheitselement und ein Verfahren zu dessen Herstellung anzugeben, das eine noch größere Fälschungssicherheit gewährleistet.

Diese Aufgabe wird mit einem Sicherheitselement mit den Merkmalen des Anspruches 1, mit einem Herstellungsverfahren mit den Merkmalen des Anspruches 16 oder einem Herstellungsverfahren mit den Merkmalen des Anspruches 17 gelöst. Die Unteransprüche sind auf bevorzugte Ausführungsformen gerichtet.

Bei dem erfindungsgemäßen Sicherheitselement ist eine Kombination aus einer Oberflächenhologrammstruktur mit einer Volumenhologrammstruktur vorgesehen. Oberflächen- und Volumenhologrammstruktur können dabei nebeneinander, zumindest teilweise überlappend oder auch ineinander verschachtelt vorliegen. "Verschachtelt" bedeutet dabei z.B. nebeneinander liegende Streifen, die abwechselnd mit einer Volumen- oder Oberflächenhologrammstruktur ausgestattet sind. Die in den unterschiedlichen Hologrammstrukturen abgespeicherten Informationen können gleich oder unterschiedlich ausgestaltet sein. Beispielsweise kann eine alphanumerische Information sowohl in der Oberflächen- als auch in der Volumenhologrannmstruktur vorliegen. Genauso gut ist es aber auch denkbar, dass in den unterschiedlichen Hologrammstrukturen unterschiedliche alphanumerische Informationen eingeschrieben sind, die sich zu einer Gesamtinformation ergänzen können. Vorzugsweise ist in dem Volumenhologramm volumenholographisch zumindest in Teilbereichen die Information des Oberflächenhologrammes gespeichert. Kommen die verschiedenen Hologrammstrukturen übereinander zu liegen, kann gemäß einer Ausführungsform das Volumenhologramm als Schutzschicht für das Prägehologramm dienen. Da ein Volumenhologramm üblicherweise durchsichtig ist, ist auch das darunter liegende Prägehologramm erkennbar. Auch hier ist es möglich, dass die Hologrammstrukturen gleiche oder unterschiedliche Informationen aufweisen.

In einer weiteren Ausführungsform ist das Prägehologramm gemäß dem in der EP 1197 350 A2 offenbarten Verfahren individualisiert. Auch hier kann über dem individualisierten Prägehologramm zusätzlich ein Volumenhologramm aufgebracht sein.

Bei einem erfindungsgemäßen Verfahren zur Herstellung des erfindungsgemäßen Sicherheitselementes wird zunächst eine Oberflächenhologrammstruktur mit einer vorzugsweise metallisierten Oberfläche bereitgestellt Auf diese Oberflächenhologrammstruktur wird eine lichtempfindliche Schicht aufgebracht und zumindest in Teilbereichen durch die lichtempfindliche Schicht hindurch beleuchtet. Auf diese Weise wird durch die Interferenz des einfallenden Lichtes mit dem von der Oberflächenhologrammstruktur reflektierten Licht in der lichtempfindlichen Schicht ein Volumenhologramm erzeugte das in den belichteten Bereichen die Information des Oberflächenhologrammes trägt. Die lichtempfindliche Schicht wird dann - abhängig vom Material der verwendeten lichtempfindlichen Schicht - entwickelt bzw. fixiert. Gewisse Photopolymermaterialien benötigen keinen gesonderten Entwicklungsschritt.

Bei einem anderen erfindungsgemäßen Verfahren zur Herstellung eines erfindungsgemäßen Sicherheitselementes wird eine Oberflächenhologrammstruktur mit einem hohen Brechungsindex, vorzugsweise größer oder gleich 2,2, bereitgestellt. Auf die Oberflächenhologrammstruktur wird eine lichtempfindliche Schicht aufgebracht und die entstehende Struktur zumindest in Teilbereichen mit einem Objektstrahl von der Seite der Oberflächenhologrammstruktur und einem Referenzstrahl von der Seite der lichtempfindlichen Schicht aus beleuchtet. Auf diese Weise wird durch die Interferenz des durch die Oberflächenhologrammstruktur hindurch getretenen Objektstrahles und des Referenzstrahles ein Volumenholograznm in der lichtempfindlichen Schicht erzeugt, die in den beleuchteten Bereichen die Information des Oberflächenhologrammes trägt. Im Anschluss wird die lichtempfindliche Schicht - abhängig vom Material der verwendeten lichtempfindlichen Schicht - entwickelt bzw. fixiert.

Das erfindungsgemäße Sicherheitselement stellt also einen Hybrid dar. Die Information ist sowohl in der Oberflächenhologrammstruktur als auch in der Volumenhologrammstruktur gespeichert. Bereits das doppelte Speichern der Information erhöht den Sicherheitswert des Sicherheitselementes signifikant. Zudem sind nur einige wenige Produktionsstätten zur Produktion von sowohl Oberflächenhologrammen als auch Volumenhologrammen fähig. Eine Fälschung muss sowohl die Oberflächenhologrammstruktur als auch die Volumenhologrammstruktur nachbilden, so dass bereits durch die begrenzten Möglichkeiten zur massenweisen Herstellung die Sicherheit erhöht wird.

Ein holographisches Kopieren der Prägehologrammstruktur wird durch das darauf befindliche Volumenhologramm erschwert. Durch die Schicht des Volumenhologrammes entsteht ein Farbfilter, der eine holographische Kopie der Oberflächenhologrammstruktur nur unter bestimmten Wellenlängen und Winkeln zulässt.

Wird versucht, die Volumenhologramm tragende Schicht von der Oberflächenhologrammschicht zu trennen, ist nach dem Wiederzusammenfügen die Manipulation leicht nachweisbar. Ein exaktes Wiederzusammenfügen ist nahezu unmöglich, so dass zwischen den holographischen Bildern, die bei Beleuchtung von der Volumenhologrammstruktur und der Prägehologrammstruktur jeweils erzeugt werden, Interferenzstreifen auftreten, die die Manipulation entlarven. Ähnlich ist es unmöglich, die beiden Hologramm tragenden Strukturen unabhängig voneinander herzustellen und dann erst zusammenzufügen. Auch hier ist eine derartig exakte Zusammenfügung nahezu unmöglich, ohne dass Interferenzstreifen bei der Beleuchtung auftreten würden. Solche Interferenzstreifen sind auch durch den kaum über die gesamte Fläche des Sicherheitselementes konstant zu fertigenden Abstand zwischen den Hologrammstruktur tragenden Elementen bedingt, so dass Interferenzen gleicher Dicke auftreten.

Das erfindungsgemäße Sicherheitsmerkmal kann als Label bzw. Decklaminat für Dokumente, z.B. in Art einer Banderole, ausgeformt sein.

Vorzugsweise ist das Volumenhologramm bei dem erfindungsgemäßen Sicherheitselement in einer Photopolymerschicht auf einer vorzugsweise metalliserten Oberflächenhologrammstruktur enthalten. Licht, das durch die Volumenhologrammstruktur auf die Prägehologrammstruktur trifft, wird von der metallisierten Oberfläche reflektiert, so dass holographische Effekte sowohl von der Volumenhologrammstruktur als auch von der Prägehologrammstruktur erzeugt werden. Die zur Herstellung der Volumenhologramme verwendeten Polymermateriale sind schwer verfügbar und dienen somit der Erhöhung der Sicherheit gegen Fälschung. Die Oberflächenhologrammstruktur wird vorzugsweise durch ein Prägehologramm gebildet, das auf einfache Weise hergestellt und bereitgestellt werden kann.

Das Prägehologramm kann in bekannter Weise ein Reflexionshologramm in einer metallisierten Oberfläche sein. Ebenfalls kann das Oberflächenhologramm eine Schicht mit hohem Brechungsindex umfassen, die zur Bildung des erfindungsgemäßen Sicherheitselementes mit einer Photopolymerschicht mit dem Volumenhologramm verbunden ist.

Licht, das durch diese Struktur tritt und die Rekonstruktionswellenlänge des Volumenhologrammes aufweist, bildet einen holographischen Effekt, zum einen durch die Volumenhologrammstruktur und zum anderen durch die Prägehologrammstruktur in der Schicht mit hohem Brechungsindex.

Die Oberflächenhologrammstruktur ist vorzugsweise so ausgestaltet, dass sie zur Erzeugung von Moire-Mustern geeignet ist, also vorzugsweise mit einem Streifenmuster. Diese Linien werden bei dem Übertragungsprozess in die Volumenhologrammstruktur ebenfalls reproduziert. Eine minimale Verdrehung des in der Volumenhologrammstruktur gespeicherten Musters gegenüber dem in dem Oberflächenhologramm gespeicherten Muster erzeugt dann Moire-Erscheinungen, wie sie bei minimaler Verdrehung zweier Streifenmuster gegeneinander bekannt sind. Bei einer solchen Ausführungsform ist eine mögliche Fälschung, die ein exaktes Zusammenfügen der beiden Schichten erfordern würde, weiter erschwert. Sollte es dem Fälscher oder Manipulator tatsächlich gelingen, die oben beschriebenen Interferenzstreifen erzeugenden Effekte derart gering zu machen, dass die Interferenzstreifen für das freie Auge nicht mehr sichtbar sind, so treten bei einer solchen Ausführungsform die beschriebenen Moire-Erscheinungen auf.

Ein noch höherer Sicherheitseffekt entsteht, wenn die Volumenhologrammstruktur tragende Schicht zumindest in einem Teilbereich geschrumpft oder geschwollen worden ist. Dadurch ändert sich die Rekonstruktionswellenlänge der Volumenhologrammstruktur in in der Regel nicht reproduzierbarer Weise. Ein solcher Schrumpf- bzw. Scliwellprozess kann bereits durch das Entwickeln bzw. Fixieren der Volumenhologrammstruktur entstehen. Durch Sicherheitselemente mit nur in Teilbereichen gezielt geschrumpften bzw. geschwollenen. Bereichen können die entstehenden Moiré- oder Interferenzstreifensysteme zur Auswertung herangezogen werden.

Solche gezielten Schrumpfprozesse können z.B. durch einen beheizten Stempel erreicht werden.

Die beim Entwickeln bzw. Fixieren der lichtempfindlichen Schicht gegebenenfalls auftretende natürliche Schrumpfung und/ oder eine bewusst herbeigeführte Schrumpfung bewirkt, dass bei dem Versuch einer holographischen Kopie Interferenzerscheinungen entstehen, welche dieselbe entlarven.

Die Information der Oberflächenhologrammstruktur kann vollflächig in die lichtempfindliche Struktur des Volumenhologrammes übertragen werden. Zusätzliche Information lässt sich speichern, wenn dies nur in Teilbereichen der Fall ist. Je nach dem, welcher Bereich des Sicherheitselementes betrachtet wird, ist die Information des Oberflächenhologramms in der Volümenhologramnstruktur wiederholt oder nicht. Eine solche teilweise Belichtung kann z.B. mithilfe einer Maske geschehen. Bei einer bevorzugten Ausführungsform wird diese Maske durch eine Flüssigkristallmaske gebildet, die durch Anlegen elektrischer Spannung in ihren Durchlässigkeitsbereichen verän derbar ist und wie eine Flüssigkristallanzeige verschiedene Muster einstellbar macht. Auf diese Weise kann das Sicherheitselement individualisiert werden, wenn z.B. die Flüssigkristallmaske in Form von Ziffern ausgestaltet ist, die bei der Produktion aufeinander folgender Sicherheitselemente hochgeschaltet werden.

Selbstverständlch kann bei allen Ausführungsformen auch die Prägehologrammstruktur bereits individualisierte Information tragen, wenn z.B. ein Prägestempel mit veränderlichem Muster zur Herstellung des Prägehologrammes verwendet wird.

Die beiden Hologramm tragenden Strukturen werden je nach Anwendung unzertrennbar, schwer zu trennend oder sogar leicht zu trennend ausgestaltet. Bei unzertrennbaren Strukturen ist eine zerstörungsfreie Trennung nicht möglich, so dass eine Fälschung durch holographisches Kopieren der einzelnen Schichten und Wiederzusammenfügen nicht möglich ist. Leicht trennbare Schichten lassen den Nachweis einer Manipulation auf einfache Weise zu, da ein Wiederzusammenfügen der einmal getrennten Schichten zu den oben bereits beschriebenen Interferenz- bzw. Moire-Effekten führt, die unmittelbar erkennen lassen, dass an dem Sicherheitselement manipuliert-wurde.

Bei einer anderen Ausführungsform ist ein "tamper-evident-Effekt" vorgesehen, bei dem z.B. durch unterschiedlich stark miteinander verbundene Schichten sichergestellt ist, dass beim Versuch, die einzelnen Schichten zu trennen, entweder die vollständige Zerstörung eintritt oder ein genau definierter Bereich trennbar ist und ein anderer gerade nicht. Eine Manipulation lässt sich dadurch leicht feststellen. Ebenso können in einer der beiden Schichten Sollbruchstellen vorgesehen sein, die beim Versuch der Schichttrennung gewährleisten, dass ein genau definiertes Muster ungetrennten. Materials verbleibt.

Vergleichbare Effekte lassen sich erzeugen, indem beide Schichten mit derartigen "tamper-evident-Effekten" bzw. Sollbruchstellen versehen sind, so dass ein Ablösen des gesamten Sicherheitselements von z.B. dem Wertelement, auf dem sie aufgebracht sind, nicht zerstörungsfrei möglich ist.

Besonders vorteilhaft ist es, wenn die in der Oberflächenhologrammstruktur und in der Volumenhologrammstruktur gespeicherte Information zumindest teilweise maschinenlesbar ist, um zu ermöglichen, das eine automatische Überprüfung durchgeführt werden kann. Sind die maschinenlesbaren Merkmale derartig ausgestaltet, dass sie mit bloßem Auge nicht gesehen werden können, wird dadurch der Nachahmungsschutz weiter erhöht. Bei einer anderen Ausführungsform sind zusätzlich zu der Information, die in beiden Hologrammstrukturen gespeichert ist, in einer der Hologrammstrukturen weitere Informationen gespeichert, die wiederum vorzugsweise maschinenlesbar sind. Durch entsprechende Kombination von in beiden Hologrammstrukturen oder nur in einer Hologrammstruktur abgelegten Informationen wird die Nachahmung weiter erschwert.

Eine signifikante Erhöhung der Sicherheit lässt sich durch Verwendung mehrerer Wellenlängen erreichen. Die Wellenlänge des Lichtes, das zur Belichtung der Volumenhologrammstruktur zur volumenholographischen Speicherung der Information verwendet wird, die auch im Prägehologramm abgelegt ist, legt die. Rekonstruktionswellenlänge der Volumenhologrammstruktur fest. Wird die Belichtung mit unterschiedlichen Wellenlängen wiederholt, so lassen sich polychromatische Volumenhologramme erzeugen, deren Nachahmung schwer möglich ist.

Bei einer anderen Ausführungsform werden in unterschiedlichen Bereichen des Sicherheitselementes unterschiedliche Wellenlängen zur Erzeugung der Volumenhologrammstruktur eingesetzt. Diese unterschiedlichen Bereiche können z.B. ebenfalls mit unterschiedlichen Masken oder mit einer veränderlichen Maske, z.B. einer Flüssigkristallmaske, erzeugt werden. Durch dieses dann in unterschiedlichen Farben erzeugte Muster kann zusätzlich Information gespeichert werden.

In die Volumenhologrammstruktur können asymmetrische Strukturen ein-belichtet sein, die unterschiedliche Intensität, z.B. für die erste positive und die erste negative Beugungsordnung, aufweisen. Solche asymmetrischen Strukturen entstehen z.B. bei der Belichtung der lichtempfindlichen Struktur mit einem Objektstrahl durch eine Oberflächenhologrammstruktur mit hohem Brechungsindex und Verwendung eines Referenzstrahles von der Seite der lichtempfindlichen Struktur. Bei einem Verfahren, bei dem eine Oberflächenhologrammstruktur mit einer reflektierenden Oberfläche eingesetzt wird, können solche asymmetrischen Strukturen z.B. erzeugt werden, indem die Oberflächenhologrammstruktur entsprechend gewählt wird.

Eine Ausführungsform des erfindungsgemäßen Sicherheitselementes und eine Ausgestaltung des erfindungsgemäßen Verfahrens werden im Folgenden unter Bezugnahme auf die einzige Figur im Detail erläutert.

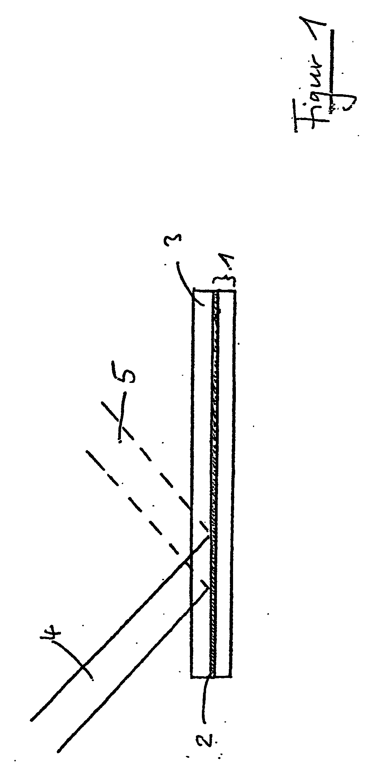

Figur 1 zeigt den Schritt der Belichtung der Volumenhologrammstruktur bei der Durchführung eines erfindungsgemäßen Verfahrens bei der Herstellung eines erfindungsgemäßen Sicherheitselementes.

1 bezeichnet ein Substrat mit einer metallischen Oberfläche 2. In der Oberfläche dieses Verbundes 1 ist ein Oberflächenrelief eingeprägt, das eine Prägehologrammstruktur darstellt. In Figur 1 ist dies nicht dargestellt, da die Reliefstrukturen in der Regel im Submikrometerbereich angesiedelt sind. Auf dem Substrat 1 mit der Prägehologrammstruktur befindet sich eine lichtempfindliche Schicht 3. 4 bezeichnet einfallendes Licht, das an der Metallschicht 2 reflektiert wird und als Lichtstrahl 5 wieder austritt.

Eine besondere Ausführungsform des erfindungsgemäßen Sicherheitselementes wird wie folgt hergestellt. Ein mit einem optischen Merkmal z.B. prägeholographisch hergestelltes Oberflächenhologramm, das mit Aluminium 2 verspiegelt ist, wird als Substratfolie 1 verwendet. Darauf wird eine lichtempfindliche Schicht 3, z.B. Photopolymere, auf die Prägehologrammfläche beschichtet. Diese Schichtstruktur 1, 3 wird durch eine Belichtungsfläche beschichtet. Diese Schichtstruktur 1, 3 wird durch eine Belichtungsanlage gefahren und mit monochromatischem Licht 4 beleuchtet. Die Photopolymerschicht 3 wird durch das einfallende Licht 4 bzw. das von dem Prägehologramm 1 reflektierte Licht 5 und der darin enthaltenen Information belichtet. In der Photopolymerschicht 3 entsteht durch die Interferenz des einfallenden Lichtes 4 und des reflektierten Lichtes 5 ein volumenholographisches Abbild der Prägehologrammstruktur 1. Das Oberflächenhologramm bzw. die darin enthaltene Information ist in dem Volumenhologramm auf diese Weise monochromatisch gespeichert. Wird die Belichtung mit anderen Wellenlängen wiederholt, ist das Oberflächenhologramm bzw. die darin enthaltene Information in dem Volumenhologramm polychromatisch gespeichert.

Die in dem Oberflächenhologramm gespeicherte und in das Volumenhologramm belichtete Information kann z.B. auch streifenförmig sein. Möglich sind z.B. gerade Linien, gekrümmte Linien oder Guillochenmuster. Solche linienförmigen Muster führen zu Moire-Erscheinungen zwischen den in der Oberflächenhologrammstruktur gespeicherten Mustern mit den in der Volumenhologrammstruktur gespeicherten Mustern, wenn z.B. versucht wird, das Sicherheitsmerkmal zu fälschen, indem zwei separate Schichten aufeinander gelegt werden und die Streifen nicht exakt übereinstimmen.

Im Anschluss wird die Photopolymerschicht 3 fixiert.

Die Belichtung kann bereichsweise geschehen, indem z.B. eine Maske eingesetzt wird. Eine solche Maske kann durch eine Flüssigkristallmaske gebildet sein, die durch Anlegen von entsprechenden Spannungen in bekannter Weise in unterschiedlichen Bereichen durchlässig wird, so dass z.B. nur die Umrisse einer Zahl durchlässig sind. So lassen sich die einzelnen Elemente mit z.B. einer fortlaufenden Nummer individualisieren.

Ebenso lassen sich unterschiedliche Bereiche mit unterschiedlichen Wellenlängen belichten, die wiederum durch eine entsprechende Maske eingestellt werden.

Im Anschluss wird die Photopolymerschicht durch Heizen geschrumpft, wodurch sich ihre Rekonstruktionswellenlänge leicht verschiebt. Gezieltes Schrumpfen, z.B. mit einem beheizten Stempel, der gegebenenfalls ebenfalls ein Muster tragen kann, erzeugt Moire- und/ oder Interferenzstreifen, die in definierte Weise zur Auswertung herangezogen werden können.

Die Erfindung stellt ein Hochsicherheitsmerkmal und ein Verfahren zu dessen Herstellung bereit. Es gibt nur sehr wenige Produktionsstätten, die Zugriff auf entsprechende Polymere haben, und eine noch geringere Anzahl, die die Technik zur Herstellung von Volumenhologrammen und gleichzeitig die Technik zur Herstellung von Oberflächenhologrammen beherrschen.

Durch die Volumenhologrammstruktur entsteht ein Farbfilter, der ein Kopieren nur in bestimmten Wellenlängen bzw. Winkeln zulässt. Die gezielte bzw. beim Entwickeln und Fixieren auftretende natürliche Schrumpfung reicht aus, dass beim Versuch der holographischen Kopie Interferenzerscheinungen entstehen, die dieselbe entlarven. Zum Beispiel maschinenlesbar versteckte Informationen sowie die schwere Verfügbarkeit der Materialien erhöht den Nachahmungsschutz.

Eine Manipulation des Sicherheitselementes ist leicht erkennbar, da ein Trennen der einzelnen Schichten und Wiederhinzufügen unweigerlich zu Interferenz und/oder Moire-Erscheinungen führt. Ebenso treten Interferenz-und/oder Moire-Erscheinungen auf, wenn versucht wird, die einzelnen Hologramm tragenden Strukturen separat herzustellen und dann zusammenzufügen.

## Patentansprüche

1. Sicherheitselement insbesondere für Wertdokumente, mit einer Oberflächenhologrammstruktur (1) und einer Volumenhologrammstruktur (3), **dadurch gekennzeichnet, daß** in dem Volumenhologramm (3) volumenholographisch zumindest in Teilbereichen die Information des Oberflächenhologrammes (1) gespeichert ist.

2. Sicherheitselement nach Anspruch 1, wobei die Oberflächenhologrammstruktur und die Volumenhologrammstruktur sich zumindest teilweise tiberlappen oder nebeneinander liegen oder ineinander verschachtelt sind.

3. Sicherheitselement nach wenigstens einem der Ansprüche 1 oder 2, bei dem das Volumenhologramm in einer Photopolymerschicht auf einer vorzugsweise metallisierten Oberflächenhologrammstruktur (1) enthalten ist

4. Sicherheitselement nach wenigstens einem der Ansprüche 1 bis 3, bei dem die Oberflächenhologrammstruktur ein Prägehologramm (1) umfasst

5. Sicherheitselement nach wenigstens einem der Ansprüche 1 bis 4, bei dem die Obernächenhologrammstruktur eine Schicht mit hohem Brechungsindex umfasst, die mit einer Photopolymerschicht out dem Volumenhologramm verbunden ist.

6. Sicherheitselement nach wenigstens einem der Ansprüche 1 bis 5, bei dem die Oberflächenhologrammstruktur (1) zumindest bereichsweise eine Muster information trägt, die Maire-Erscheinungen ermöglicht, vorzugsweise also streifenförmige Muster umfasst.

7. Sicherheitselement nach wenigstens einem der Ansprüche 1 bis 6, bei dem die Volumenhologramnstruktur (3) zumindest in einem Teilbereich geschrumpft oder geschwollen ist

8. Sicherheitselement nach wenigstens einem der Ansprüche 1 bis 7, bei dem der Verbund aus Oberflächerthologrammstruktur (1) und Volumenhologrammstruktur mit einem tamper-evident-Effekt versehen ist.

9. Sicherheitselement nach wenigstens einem der Ansprüche 1 bis 8, bei dem entweder die Oberflächenhologrammstruktur (1) oder die Volumenhologrammstruktur (3) oder beide in einer Schicht mit zumindest einer Soll-bruchstelle vorgesehen ist.

10. Sicherheitselement nach wenigstens einem der Ansprüche 1 bis 9 mit einer Klebeschicht auf einer der äußeren Oberflächen.

11. Sicherheitselement nach wenigstens einem der Ansprüche 1 bis 10, bei dem die in der Oberflächenhologrammstruktur (1) und in der Volumenhologrammstruktur (3) holographisch gespeicherte Information zumindest teilweise maschinenlesbar ist.

12. Sicherheitselement nach wenigstens einem der Ansprüche 1 bis 11, bei dem entweder nur in der Obersachenhologrammstruktur (1) oder nur in der Volumenhologrammstruktur (3) zusätzlich zu der in beiden Schichten holographisch gespeicherten Information vorzugsweise maschinenlesbare holographische Zusatzintormation gespeichert ist.

13. Sicherheitselement nach wenigstens einem der Ansprüche 1 bis 12, bei dem die volumenholographisch in den Volumenhologramm (3) gespeicherte Information des Oberflächenhologrammes mit Licht unterschiedlicher Wellenlänge rekonstruierbar ist.

14. Sicherheitselement nach wenigstens einem der Ansprüche 1 bis 13, bei dem die volumenholographisch in dem Volumenhologramm (3) gespeicherte Information des Oberflächenhologrammes in unterschiedlichen Bereichen mit Licht unterschiedlicher Wellenlänge rekonstruierbar ist

15. Sicherheitselement nach wenigstens einem der Ansprüche 1 bis 14, bei dem das Volumenhologramm (3) asymmetrische Strukturen aufweist.

16. Verfahren zur Herstellung eines Sicherheitselementes, insbesondere für Wertdokumente, mit folgenden Schritten:
- Bereitstellen einer Oberflächenhologrammstruktur (1) mit einer reflektierenden, vorzugsweise metallisierten Oberfläche (2),
- Aufbringen einer lichtempfindlichen Schicht (3),
- zumindest einmaliges Beleuchten der Oberflächenhologrammstruktur (1) zumindest in Teilbereichen durch die lichtempfindliche Schicht (3) hindurch zur Erzeugung eines Volumenhologrammes in der-lichtempfindlichen Schicht (3) durch die Interferenz des einfallenden (4) mit dem von der Oberflächenhologrammstruktur (1, 2) reflektierten Licht, und
- Entwickeln bzw. Fixieren des Volumenhologrammes in der lichtempfindlichen Schicht (3).

17. Verfahren zur Herstellung eines Sicherheitselementes, insbesondere für Wertdokumente, mit folgenden Schritten:
- Bereitstellen einer Oberflächenhologrammstruktur mit hohem Brechungsindex,
- Aufbringen einer lichtempfindlichen Schicht,
- zumindest einmaliges Beleuchten der lichtempfindlichen Schicht zumindest in Teilbereichen mit einem Objektstrahl von der Seite der Oberflächenhologrammstruktur aus und einem Referenzstrahl von der Seite der lichtempfindlichen Schicht aus zur Erzeugung eines Volumenhologrammes in der lichtempflndlichen Schicht durch die Interferenz des Objektstrahles mit dem Referenzstrahl, und
- Entwickeln bzw. Fixieren des Volumenhologrammes in der lichtempfindlichen Schicht.

18. Verfahren zur Herstellung eines Sicherheitselementes nach einem der Ansprüche 16 oder 17, bei dem bei der Erzeugung der Volumenhologramm struktur nur einzelne Bereiche belichtet werden.

19. Verfahren nach wenigstens einem der Ansprüche 16 bis 18, bei dem der Schritt des Beleuchtens zwei- oder mehrfach mit unterschiedlicher Wellenlänge durchgeführt wird.

20. Verfahren nach Anspruch 19, bei dem die Beleuchtung mit unterschiedlichen Wellenlängen in unterschiedlichen Bereichen durchgeführt wird.

21. Verfahren zur Herstellung eines Sicherheitselementes nach wenigstens einem der Ansprüche 18 bis 20, bei dem die Belichtung durch eine Maske erfolgt.

22. Verfahren nach Anspruch 21, wobei die Belichtung durch eine veränderbare Flüssigkristallmaske erfolgt.

23. Verfahren zur Herstellung eines Sicherheitselementes nach wenigstens einem der Ansprüche 16 bis 22, bei dem nach der Herstellung des Volumenhologrammes die Volumenhologramm tragende Schicht (3) zumindest in Teilbereichen geschrumpft oder geschwollen wird.

24. Verfahren zur Herstellung eines Sicherheitselementes nach wenigstens einem der Ansprüche 16 bis 23, bei dem als lichtempfindliche Schicht (3) eine Photopolymerschicht eingesetzt wird.

25. Verfahren zur Herstellung eines Sicherheitselementes nach wenigstens einem der Ansprüche 16 bis 24, bei dem die Oberflächenhologrammstruktur (1) zumindest bereichsweise ein Muster umfasst, das zu Ausbildung von Moire-Effekten geeignet ist vorzugsweise streifenförmige Bereiche umfaßt

26. Verfahren zur Herstellung eines Sicherheitselementes nach wenigstens einem der Ansprüche 16 bis 24, bei dem asymmetrische Strukturen in die Volumenhologrammstruktur einbelichtet werden

## Claims

1. A security element, in particular for documents of value, having a surface hologram structure (1) and a volume hologram structure (3), **characterized in that** in the volume hologram (3) at least in partial areas there is volume-holographically stored the information of the surface hologram (1).

2. The security element according to claim 1, wherein the surface hologram structure and the volume hologram structure at least partially overlap each other or lie side-by-side or are nested into each other.

3. The security element according to at least one of claims 1 or 2, wherein the volume hologram is contained in a photopolymer layer on a preferably metalized surface hologram structure (1).

4. The security element according to at least one of claims 1 to 3, wherein the surface hologram structure comprises an embossed hologram (1).

5. The security element according to at least one of claims 1 to 4, wherein the surface hologram structure comprises a layer with high refractive index, which is connected with the volume hologram with a photopolymer layer.

6. The security element according to at least one of claims 1 to 5, wherein the surface hologram structure (1) at least in certain areas carries a pattern information, which permits moiré effect, i.e. preferably comprises strip-shaped patterns.

7. The security element according to at least one of claims 1 to 6, wherein the volume hologram structure (3) at least in a partial area is shrunk or swollen.

8. The security element according to at least one of claims 1 to 7, wherein the compound of surface hologram structure (1) and volume hologram structure is provided with a tamper evident effect.

9. The security element according to at least one of claims 1 to 8, wherein either the surface hologram structure (1) or the volume hologram structure (3) or both are provided in a layer having at least one rated break point.

10. The security element according to at least one of claims 1 to 9 with an adhesive layer on one of the outer surfaces.

11. The security element according to at least one of claims 1 to 10, wherein the information holographically stored in the surface hologram structure (1) and in the volume hologram structure (3) at least partially is machine-readable.

12. The security element according to at least one of claims 1 to 11, wherein either only in the surface hologram structure (1) or only in the volume hologram structure (3) there is stored preferably machine-readable additional holographic information in addition to the information holographically stored in the two layers.

13. The security element according to at least one of claims 1 to 12, wherein the information of the surface hologram volume-holographically stored in the volume hologram (3) is reconstructable with light of different wavelength.

14. The security element according to at least one of claims 1 to 13, wherein the information of the surface hologram volume-holographically stored in the volume hologram (3) is reconstructable in different areas with light of different wavelength.

15. The security element according to at least one of claims 1 to 14, wherein the volume hologram (3) has asymmetric structures.

16. A method for manufacturing a security element, in particular for documents of value, with the following steps:
- providing a surface hologram structure (1) with a reflecting, preferably metalized surface (2),
- applying a light-sensitive layer (3),
- illuminating the surface hologram structure (1) at least once at least in partial areas through the light-sensitive layer (3) for producing a volume hologram in the light-sensitive layer (3) by the interference of the incident (4) light with the light reflected by the surface hologram structure (1, 2), and
- developing and/or fixing the volume hologram in the light-sensitive layer (3).

17. A method for manufacturing a security element, in particular for documents of value, with the following steps:
- providing a surface hologram structure with high refractive index,
- applying a light-sensitive layer,
- illuminating the light-sensitive layer at least once at least in partial areas with an object beam from the side of the surface hologram structure and a reference beam from the side of the light-sensitive layer for producing a volume hologram in the light-sensitive layer by the interference of the object beam with the reference beam, and
- developing and/or fixing the volume hologram in the light-sensitive layer.

18. The method for manufacturing a security element according to one of the claims 16 or 17, wherein when producing the volume hologram structure only particular areas are exposed.

19. The method according to at least one of claims 16 to 18, wherein the step of illuminating is carried out two times or several times with different wavelength.

20. The method according to claim 19, wherein the illumination with different wavelengths is carried out in different areas.

21. The method for manufacturing a security element according to at least one of claims 18 to 20, wherein the exposure is effected with the help of a mask.

22. The method according to claim 21, wherein the exposure is effected through a changeable liquid crystal mask.

23. The method for manufacturing a security element according to at least one of claims 16 to 22, wherein after the manufacturing of the volume hologram the layer (3) carrying the volume hologram at least in partial areas is shrunk or swollen.

24. The method for manufacturing a security element according to at least one of claims 16 to 23, wherein as a light-sensitive layer (3) a photopolymer layer is used.

25. The method for manufacturing a security element according to at least one of claims 16 to 24, wherein the surface hologram structure (1) at least in certain areas comprises a pattern, which is suitable for the formation of moiré effects, preferably comprises strip-shaped areas.

26. The method for manufacturing a security element according to at least one of claims 16 to 24, wherein asymmetric structures are exposed into the volume hologram structure.

## Revendications

1. Elément de sécurité, notamment pour documents de valeur, avec une structure d'hologramme de surface (1) et une structure d'hologramme de volume (3), **caractérisé en ce que** l'information de l'hologramme de surface (1) est enregistrée holographiquement en volume au moins dans des zones partielles dans l'hologramme de volume (3).

2. Elément de sécurité selon la revendication 1, la structure d'hologramme de surface et la structure d'hologramme de volume se chevauchant au moins en partie ou se situant l'une à côté de l'autre ou étant imbriquées l'une dans l'autre.

3. Elément de sécurité selon au moins l'une des revendications 1 ou 2, dans lequel l'hologramme de volume est contenu dans une couche de photopolymère sur une structure d'hologramme de surface (1) de préférence métallisée.

4. Elément de sécurité selon au moins l'une des revendications de 1 à 3, dans lequel la structure d'hologramme de surface (1) comprend un hologramme estampé (1).

5. Elément de sécurité selon au moins l'une des revendications de 1 à 4, dans lequel la structure d'hologramme de surface comprend une couche à indice de réfraction élevé qui est jointe à l'hologramme de volume par l'intermédiaire d'une couche de photopolymère.

6. Elément de sécurité selon au moins l'une des revendications de 1 à 5, dans lequel la structure d'hologramme de surface (1) porte au moins dans des zones partielles une information-motif permettant des effets de moiré, comprend donc de préférence des motifs en bandes.

7. Elément de sécurité selon au moins l'une des revendications de 1 à 6, dans lequel la structure d'hologramme de volume (3) est rétractée ou boursouflée au moins dans une zone partielle.

8. Elément de sécurité selon au moins l'une des revendications de 1 à 7, dans lequel le composite constitué de la structure d'hologramme de surface (1) et de la structure d'hologramme de volume (3) est pourvu d'un effet anti-fraude.

9. Elément de sécurité selon au moins l'une des revendications de 1 à 8, dans lequel il est prévu que soit la structure d'hologramme de surface (1), soit la structure d'hologramme de volume (3), soit toutes les deux se trouvent dans une couche pourvue d'au moins une zone destinée à la rupture.

10. Elément de sécurité selon au moins l'une des revendications de 1 à 9, avec une couche adhésive sur l'une des surfaces extérieures.

11. Elément de sécurité selon au moins l'une des revendications de 1 à 10, dans lequel l'information enregistrée holographiquement dans la structure d'hologramme de surface (1) et dans la structure d'hologramme de volume (3) est au moins partiellement lisible par machine.

12. Elément de sécurité selon au moins l'une des revendications de 1 à 11, dans lequel de l'information supplémentaire holographique et lisible de préférence par machine est enregistrée soit uniquement dans la structure d'hologramme de surface (1), soit uniquement dans la structure d'hologramme de volume (3) en plus de l'information enregistrée holographiquement dans les deux couches.

13. Elément de sécurité selon au moins l'une des revendications de 1 à 12, dans lequel l'information de l'hologramme de surface enregistrée holographiquement en volume dans l'hologramme de volume (3) peut être reconstruite au moyen de lumière de différentes longueurs d'onde.

14. Elément de sécurité selon au moins l'une des revendications de 1 à 13, dans lequel l'information de l'hologramme de surface enregistrée holographiquement en volume dans l'hologramme de volume (3) peut être reconstruite dans différentes zones au moyen de lumière de différentes longueurs d'onde.

15. Elément de sécurité selon au moins l'une des revendications de 1 à 14, dans lequel l'hologramme de volume (3) présente des structures asymétriques.

16. Procédé de production d'un élément de sécurité, notamment pour documents de valeur, comprenant les étapes suivantes :
- mise à disposition d'une structure d'hologramme de surface (1) ayant une surface réfléchissante (2), de préférence métallisée,
- application d'une couche photosensible (3),
- éclairage au moins une fois de la structure d'hologramme de surface (1) au moins dans des zones partielles à travers la couche photosensible (3) pour produire un hologramme de volume dans la couche photosensible (3) par l'interférence de la lumière incidente (4) avec la lumière réfléchie par la structure d'hologramme de surface (1, 2), et
- développement et/ou fixation de l'hologramme de volume dans la couche photosensible (3).

17. Procédé de production d'un élément de sécurité, notamment pour documents de valeur, comprenant les étapes suivantes :
- mise à disposition d'une structure d'hologramme de surface (1) ayant un indice de réfraction élevé,
- application d'une couche photosensible (3),
- éclairage au moins une fois de la couche photosensible (3) au moins dans des zones partielles au moyen d'un faisceau objet par le côté de la structure d'hologramme de surface (1) et au moyen d'un faisceau de référence par le côté de la couche photosensible pour produire un hologramme de volume dans la couche photosensible par l'interférence du faisceau objet et du faisceau de référence, et
- développement et/ou fixation de l'hologramme de volume dans la couche photosensible.

18. Procédé de production d'un élément de sécurité selon l'une des revendications 16 ou 17, dans lequel seulement certaines zones sont éclairées lors de la production de la structure d'hologramme de volume.

19. Procédé selon au moins l'une des revendications de 16 à 18, dans lequel l'étape d'éclairage est accomplie deux ou plusieurs fois avec de différentes longueurs d'onde.

20. Procédé selon la revendication 19, dans lequel l'éclairage est effectué avec de différentes longueurs d'onde dans des zones différentes.

21. Procédé de production d'un élément de sécurité selon au moins l'une des revendications de 18 à 20, dans lequel l'exposition est effectuée à travers un masque.

22. Procédé selon la revendication 21, l'éclairage étant effectué à travers un masque à cristaux liquides modifiable.

23. Procédé de production d'un élément de sécurité selon au moins l'une des revendications de 16 à 22, dans lequel, une fois l'hologramme de volume fabriqué, la couche (3) portant l'hologramme de volume est rétractée ou boursouflée au moins dans des zones partielles.

24. Procédé de production d'un élément de sécurité selon au moins l'une des revendications de 16 à 23, dans lequel une couche de photopolymère est utilisée en tant que couche (3) photosensible.

25. Procédé de production d'un élément de sécurité selon au moins l'une des revendications de 16 à 24, dans lequel la structure d'hologramme de surface (1) comprend au moins dans certaines zones un motif approprié à engendrer des effets de moiré, comprend ainsi de préférence des zones en bandes.

26. Procédé de production d'un élément de sécurité selon au moins l'une des revendications de 16 à 24, dans lequel des structures asymétriques sont produites par exposition dans la structure d'hologramme de volume.
